# FASCICULE DE BREVET EUROPEEN

(11) **EP 0 749 187 B1**
(45) Date de publication et mention de la délivrance du brevet: **20.09.2000**
(21) Numéro de dépôt: 96410063.0
(22) Date de dépôt: 30.05.1996
(51) Int. Cl.: H02B 13/025

(54) **Poste moyenne tension à appareillage électrique isolé par un gaz**
Mittelspannungsstation mit gasisoliertem Schaltgerät
Medium voltage substation with gasinsulated switchgear

(30) Priorité: 12.06.1995 FR 9507041
(43) Date de publication de la demande: 18.12.1996
(73) Titulaire: Schneider Electric Industries SA, 92500 Rueil-Malmaison (FR)
(72) Inventeur: Chossinand, Louis, 38050 Grenoble Cedex 09 (FR); Cayoux, Bernard, 38050 Grenoble Cedex 09 (FR); Orban, Jean-CLaude, 38050 Grenoble Cedex 09 (FR)
(74) Mandataire: Ritzenthaler, Jacques

(56) Documents cités:
- WO-A-91/03089
- DE-A- 2 458 497
- DE-A- 2 915 504
- DE-U- 9 202 127
- ELEKTRONISCHE ZEITSCHRIFT ETZ, vol. 107, no. 22, Novembre 1986, BERLIN, pages 1066-1069, XP002011743 FERDINAND LUTZ: "Störlichtbogen-Druck-entwicklung in Schaltanlagen"

## Description

L'invention est relative à un poste électrique servi-enterré pour l'extérieur, comprenant une cabine en béton renfermant un tableau électrique ayant au moins une cellule d'appareillage à moyenne tension et à isolement gazeux, ladite cellule comportant une enveloppe étanche remplie de gaz isolant à rigidité diélectrique élevée, et équipée d'un élément de sécurité, dont l'ouverture en cas de surpression anormale à l'intérieur de l'enveloppe autorise l'échappement des gaz chauds en provenance de l'enveloppe vers un caisson de détente,

L'incorporation d'un tableau moyenne tension, à appareillage isolé par un gaz, dans une cabine fermée d'un poste, pose des problèmes de sécurité pour les personnes se trouvant au voisinage. En cas d'un amorçage accidentel à l'intérieur de la cellule, l'élévation brusque de la pression provoque l'intervention de l'élément de sécurité, par exemple l'éclatement de la membrane, qui laisse ensuite s'échapper les gaz chauffés par l'arc. En cas d'ouverture de la porte de la cabine, par exemple pour des raisons de maintenance, ou de contrôle, il est primordial que le personnel ne soit pas directement exposé à la zone d'échappement de ces gaz chauds.

Le document DE-A 2915 504 se rapporte à un poste électrique dans lequel un caisson de détente est associé à la cellule de l'appareillage électrique, mais il subsiste néanmoins des possibilités d'échappement de gaz insuffisamment refroidis en cas d'amorçage interne.

L'objet de l'invention consiste à perfectionner un poste moyenne tension à appareillage isolé par un gaz pour garantir la sécurité totale des personnes en cas d'amorçage interne.

L'invention est caractérisée en ce que:
- L'élément de sécurité se trouve à la base de l'enveloppe de la cellule prenant appui sur des moyens de support reposant sur une dalle horizontale, séparée du fond de la cabine par ledit caisson,
- une ouverture est ménagée dans la dalle pour autoriser ledit échappement gazeux vers le caisson,
- des orifices d'échappement sont agencés entre le caisson et le premier compartiment enterré de la cabine pour le passage des gaz détendus,
- et les moyens de support et/ou le caisson renferment des moyens refroidisseurs placés sur le trajet des gaz d'échappement.

Selon un mode de réalisation préférentiel, l'élément de sécurité peut être constitué par une membrane d'éclatement ou un clapet taré. Les gaz chauds subissent une première action de détente et de refroidissement par lesdits moyens refroidisseurs, suivi d'une deuxième action de détente dans le caisson inférieur.

D'autres avantages ressortiront plus clairement de la description qui va suivre d'un mode de réalisation de l'invention, donné à titre d'exemple non limitatif, et représenté aux dessins annexés, dans lesquels :
- la figure 1 est une vue du poste selon l'invention représentée en coupe selon la ligne 1-1 de la figure 2,
- la figure 2 montre une vue en coupe selon la ligne 2-2 de la figure 1.

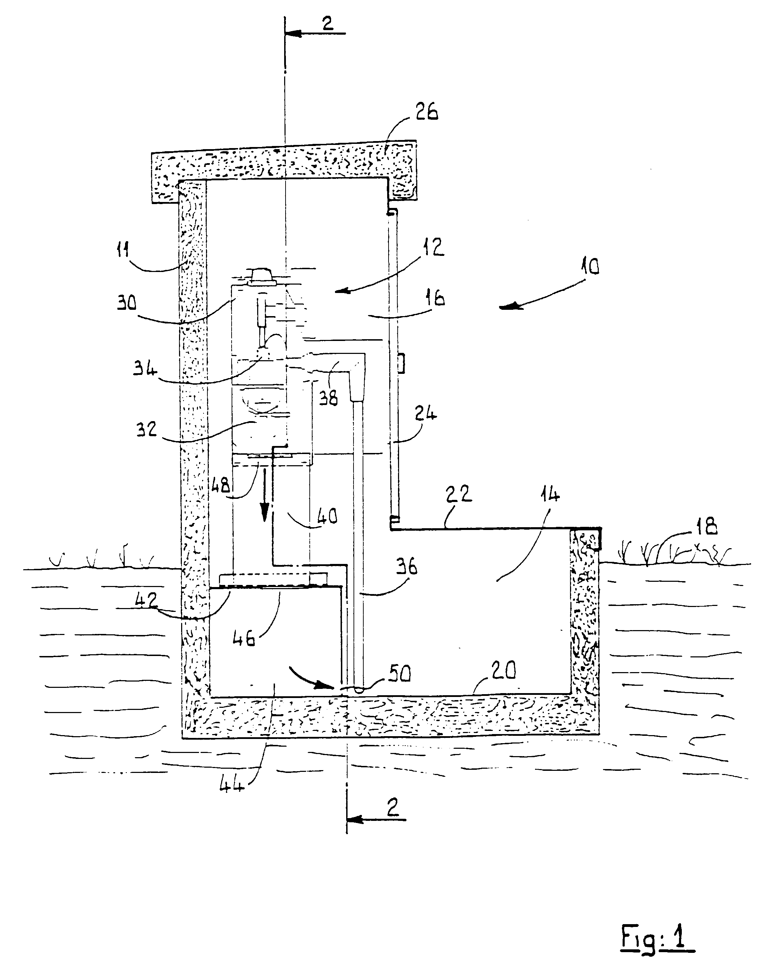

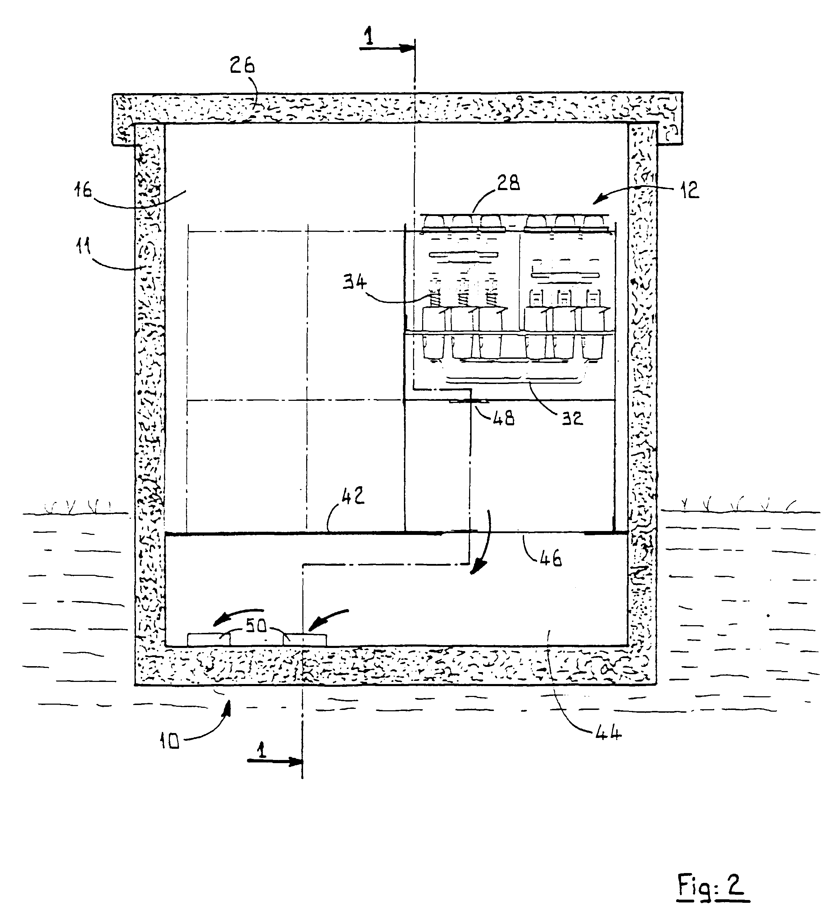

Sur les figures 1 et 2, un poste électrique 10 semi-enterré comporte une cabine 11 formée par une enveloppe en béton, renfermant un tableau électrique 12 moyenne tension. La cabine 11 est subdivisée en deux compartiments 14, 16 superposés, comprenant un premier compartiment 14 enterré, et un deuxième compartiment 16 en élévation agencé au-dessus du niveau du sol 18, et abritant les différents appareillages du tableau électrique 12.

Le premier compartiment 14 est totalement enterré, et présente un fond 20 plat de section horizontale supérieure à la base du deuxième compartiment 16 en élévation. Le premier compartiment 14 enfoui dans la terre est accessible par un trottoir 22 démontable autorisant le raccordement électrique du poste 10. Le trottoir 22 horizontal se trouve légèrement en surélévation par rapport au niveau du sol 18, et est placé directement au droit d'une porte 24 d'accès à la face avant du tableau 12.

Un toit 26 recouvre en totalité le deuxième compartiment 16 en s'étendant parallèlement au trottoir 22 avec un décalage vertical correspondant à la hauteur hors sol du poste 10.

Le tableau 12 à moyenne tension comporte des cellules 28 d'arrivée ou de protection 58, dont un exemple de réalisation est décrit dans le brevet français 2.507.835.

Chaque cellule 28 est constituée par une enveloppe 30 métallique étanche, renfermant un jeu de barres 32 de répartition, et un appareil de coupure 34 triphasé, notamment un interrupteur ou un disjoncteur.

Le raccordement électrique de l'appareil de coupure 34 s'effectue au moyen de câbles 36 associés à des bornes 38 d'embrochage. Le fond du deuxième compartiment 16 est ouvert, de manière à communiquer avec le premier compartiment 14. Il est prévu des orifices de ventilation (non représentés), destinés à assurer une circulation naturelle d'air dans les deux compartiments 14, 16 du poste 10.

L'enveloppe 30 de chaque cellule 28 est remplie de gaz isolant, à rigidité diélectrique élevée, notamment de l'hexafluorure de soufre à une pression prédéterminée. Le gaz est utilisé comme moyen d'isolement, et comme agent de soufflage pour l'extinction de l'arc.

La base de chaque cellule 28 prend appui sur un piétement de support 40 creux, qui repose sur une dalle 42 horizontale, séparée du fond 20 par un caisson 44 de détente. Une ouverture 46 est ménagée dans la dalle 42 pour faire communiquer le caisson 44 avec le volume intérieur du piétement 40 de chaque cellule 28.

La base de l'enveloppe 30 est munie d'un élément de sécurité 48 autorisant l'échappement du gaz en cas de surpression anormale à l'intérieur de l'enveloppe 30. Une telle surpression est susceptible d'être engendrée lors d'un amorçage interne faisant apparaître un arc entre deux pièces conductrices portées à des potentiels différents. L'élément de sécurité 48 peut être formé par une membrane d'éclatement, ou par un clapet taré susceptible de s'ouvrir lorsque la pression gazeuse dépasse un seuil de réglage prédéterminé. Dans ce cas, les gaz chauds en provenance de l'enveloppe 30 peuvent s'échapper vers le bas, en traversant d'abord l'organe de support 40, et pénètrent ensuite dans le caisson 44 à travers l'ouverture 46. Le caisson 44 communique avec le premier compartiment 14 enterré par des orifices 50 situés au voisinage du fond 20.

L'organe de support 40 creux peut être muni de moyens refroidisseurs placés le long du parcours des gaz chauds, de manière à les refroidir après l'ouverture de l'élément de sécurité 48. En plus de l'effet de refroidissement, le gaz subit une première action de détente à l'intérieur de l'organe de support 40. Une deuxième détente intervient par la suite dans le caisson 44 inférieur pour réduire au minimum la pression du gaz lors de son échappement à travers les orifices 50 vers le premier compartiment 14.

Le caisson 40 est réalisé en un matériau métallique, mais tout autre type de matériau peut être utilisé.

## Revendications

1. Poste électrique semi-enterré pour l'extérieur, comprenant une cabine (11) en béton renfermant un tableau électrique ayant au moins une cellule (28) d'appareillage à moyenne tension et à isolement gazeux, ladite cellule comportant une enveloppe (30) étanche remplie de gaz isolant à rigidité diélectrique élevée, et équipée d'un élément de sécurité (48), dont l'ouverture en cas de surpression anormale à l'intérieur de l'enveloppe (30) autorise l'échappement des gaz chauds en provenance de l'enveloppe (30) vers un caisson (44) de détente, caractérisé en ce que
- l'élément de sécurité (48) se trouve à la base de l'enveloppe (30) de la cellule (28) prenant appui sur des moyens de support reposant sur une dalle (42) horizontale, séparée du fond (20) de la cabine (11) par ledit caisson (44),
- une ouverture (46) est ménagée dans la dalle (42) pour autoriser ledit échappement gazeux vers le caisson (44),
- des orifices (50) d'échappement sont agencés entre le caisson (44) et le premier compartiment (14) enterré de la cabine (11) pour le passage des gaz détendus,
- et les moyens de support et/ou le caisson (44) renferment des moyens refroidisseurs placés sur le trajet des gaz d'échappement.

2. Poste électrique selon la revendication 1, caractérisé en ce que la cabine (11) comporte un deuxième compartiment (16) en élévation, agencé au-dessus du niveau du sol (18), et que la cellule (28) se trouve dans ledit deuxième compartiment (16).

3. Poste électrique selon la revendication 1 ou 2, caractérisé en ce que la dalle (42) est disposée dans le premier compartiment (14) enterré, lequel est accessible par un trottoir (22) démontable, situé en droit d'une porte (24) d'accès au deuxième compartiment (16), le caisson (44) étant éloigné de ladite porte (24).

4. Poste électrique selon la revendication 1, caractérisé en ce que l'élément de sécurité (48) comprend une membrane d'éclatement.

5. Poste électrique selon la revendication 1, caractérisé en ce que l'élément de sécurité comporte un clapet taré susceptible de s'ouvrir lorsque la pression gazeuse à l'intérieur de l'enveloppe (30) dépasse un seuil de réglage prédéterminé.

6. Poste électrique selon la revendication 1, caractérisé en ce que le gaz d'isolement de l'appareillage est de l'hexafluorure de soufre.

7. Poste électrique selon la revendication 1, caractérisé en ce que les moyens de support comportent un piétement (40) creux agencé entre la base de la cellule (28) et la dalle (42) horizontale.

## Patentansprüche

1. Teilweise ins Erdreich versenkte Freiluft-Netzstation mit einer Betonkabine (11), die eine Schaltanlage mit mindestens einem gasisolierten Mittelspannungs-Schaltfeld (28) enthält, welches Schaltfeld ein mit einem Isoliergas hoher dielektrischer Festigkeit gefülltes gasdichtes Gehäuse (30) sowie eine Sicherheitseinrichtung (48) umfaßt, deren Öffnen bei Auftreten eines anomalen Überdrucks im Innern des Gehäuses (30) ein Entweichen der heißen Gase aus dem Gehäuse (30) in einen Druckentlastungskasten (44) erlaubt, dadurch gekennzeichnet, daß
- die Sicherheitseinrichtung (48) an der Grundfläche des Gehäuses (30) des Schaltfelds (28) angeordnet ist, welche auf Stützmitteln aufliegt, die auf einer waagerechten, vom Boden (20) der Kabine (11) durch den genannten Kasten (44) getrennten Platte (42) gelagert sind,
- eine Öffnung in der Platte (42) ausgebildet ist, um das genannte Entweichen der Gase in den Kasten (44) zu ermöglichen,
- zwischen dem Kasten (44) und dem ersten, ins Erdreich versenkten Abteil (14) der Kabine (11) Entlüftungsöffnungen (50) zur Abführung der entspannten Gase ausgebildet sind,
- und die Stützmittel und/oder der Kasten (44) im Strömungsweg der abgeführten Gase angeordnete Kühlelemente enthalten.

2. Netzstation nach Anspruch 1, dadurch gekennzeichnet, daß die Kabine (11) ein zweites aus dem Erdreich (18) herausstehendes, erhöhtes Abteil (16) umfaßt und das Schaltfeld (28) im genannten zweiten Abteil (16) angeordnet ist.

3. Netzstation nach Anspruch 1 oder 2, dadurch gekennzeichnet, daß die Platte (42) im ersten, ins Erdreich versenkten Abteil (14) angeordnet ist, zu dem der Zugang über eine Bedienungsplattform (22) erfolgen kann, die in Höhe einer den Zugang zum zweiten Abteil erlaubenden Tür (24) angeordnet ist, wobei zwischen dem Kasten (44) und der genannten Tür (24) ein großer Abstand vorhanden ist.

4. Netzstation nach Anspruch 1, dadurch gekennzeichnet, daß die Sicherheitseinrichtung (48) eine Sprengmembran umfaßt.

5. Netzstation nach Anspruch 1, dadurch gekennzeichnet, daß die Sicherheitseinrichtung ein Rückschlagventil umfaßt, das dazu dient zu öffnen, wenn der Gasdruck im Innern des Gehäuses (30) einen festgelegten Einstellwert überschreitet.

6. Netzstation nach Anspruch 1, dadurch gekennzeichnet, daß es sich bei dem Isoliergas des Schaltgeräts um Schwefelhexafluorid handelt.

7. Netzstation nach Anspruch 1, dadurch gekennzeichnet, daß die Stützmittel ein Hohlgestell (40) umfassen, das zwischen der Grundfläche des Schaltfelds (28) und der waagerechten Platte (42) angeordnet ist.

## Claims

1. A semi-underground outdoor electrical sub-station, comprising a concrete cabin (11) containing an electrical switchboard having at least one medium-voltage, gas-isolated switchgear cubicle (28), said cubicle comprising an air-tight enclosure (30) filled with isolating gas of high dielectric strength, and equipped with a safety element (48), opening of which element in the event of an abnormal overpressure occurring inside the enclosure (30) enables the hot gases coming from the enclosure (30) to escape to a pressure relief chamber (44), characterized in that :
- the safety element (48) is located at the base of the enclosure (30) of the cubicle (28) being supported by support means resting on a horizontal slab (42) separated from the bottom (20) of the cabin (11) by said chamber (44),
- an opening (46) is arranged in the slab (42) to enable said gas outlet to the chamber (44),
- outlet orifices (50) are arranged between the chamber (44) and the first underground compartment (14) of the cabin (11) for the pressure-relieved gases to flow,
- and the support means and/or the chamber (44) contain cooling means placed on the path of the exhaust gases.

2. The electrical sub-station according to claim 1, characterized in that the cabin (11) comprises a second raised compartment (16) arranged above ground level (18), and that the cubicle (28) is housed in said second compartment (16).

3. The electrical sub-station according to claim 1 or 2, characterized in that the slab (42) is located in the first underground compartment (14), which is accessible by a removable walkway (22) situated facing a door (24) giving access to the second compartment (16), the chamber (44) being far from said door (24).

4. The electrical sub-station according to claim 1, characterized in that the safety element (48) comprises a bursting membrane.

5. The electrical sub-station according to claim 1, characterized in that the safety element (48) comprises a calibrated valve designed to open when the gas pressure inside the enclosure (30) exceeds a predetermined set threshold.

6. The electrical sub-station according to claim 1, characterized in that the switchgear isolating gas is sulphur hexafluoride.

7. The electrical sub-station according to claim 1, characterized in that the support means comprise a hollow mounting (40) arranged between the base of the cubicle (28) and the horizontal slab (42).
